# EUROPÄISCHE PATENTSCHRIFT

(11) **EP 2 185 336 B1**
(45) Veröffentlichungstag und Bekanntmachung des Hinweises auf die Patenterteilung: **18.07.2012**
(21) Anmeldenummer: 08803334.5
(22) Anmeldetag: 28.08.2008
(51) Int. Cl.: B29C 47/90

(54) **Kalibriervorrichtung mit Trockenkalibrierstrecke und Nasskalibrierstrecke und entsprechendes Kalibrierverfahren**
Calibrating device having a dry calibrating distance and a wet calibrating distance and corresponding calibrating method
Dispositif de calibrage à sec et humide et procédé correspondant

(30) Priorität: 30.08.2007 DE 102007041795; 27.12.2007 AT 7632007 U
(43) Veröffentlichungstag der Anmeldung: 19.05.2010
(73) Patentinhaber: Greiner Tool. Tec Gmbh, 4542 Nussbach (AT)
(72) Erfinder: KÖSSL, Reinhold, A-4552 Wartberg/K (AT)
(74) Vertreter: Gross, Felix
(86) Internationale Anmeldenummer: PCT/EP2008/061322
(87) Internationale Veröffentlichungsnummer: WO 2009/027481

(56) Entgegenhaltungen:
- EP-A- 1 524 093
- AT-U1- 6 407
- AT-U1- 6 791
- DATABASE WPI Week 199534 Thomson Scientific, London, GB; AN 1995-260535 XP002510339 -& JP 07 164511 A (SEKISUI CHEM IND CO LTD) 27. Juni 1995 (1995-06-27)

## Beschreibung

Die Erfindung betrifft eine Kalibriervorrichtung nach dem Oberbegriff des Anspruchs 1 und ein Kalibrierverfahren nach dem Oberbegriff des Anspruchs 6.

Es ist bekannt, dass ein Extrudat (z.B. ein Kunststoffhohlprofil) nach dem Austritt aus einem Extrudierwerkzeug durch eine Kalibrierung weiterbehandelt wird. Die Kalibrierung dient der Stabilisierung der Form des Extrudates, das sich nach dem Verlassen des Extruderwerkzeugs noch im plastischen Zustand befindet. In der Kalibrierung wird das Extrudat gekühlt (z.B. mit Wasser) und ggf. durch Vakuum in Form gehalten, bis es eine ausreichende Formstabilität erreicht hat.

Dabei werden in der Regel eine Trockenkalibrierstrecke und eine Nasskalibrierstrecke eingesetzt.

Die Trockenkalibrierstrecke weist meist mehrere Kalibrierblöcke auf (z.B. 3 bis 8, für Fensterprofile), die mit Wasser so gekühlt werden, dass die Innenwandung (d.h. die wandung, die zum Extrudat zeigt) gekühlt wird. Jeder Kalibrierblock benötigt dabei ca. 3 bis 4 m³ Wasser pro Stunde. Während einer Schicht von 8 h verbraucht eine solche Trockenkalibrierung somit im Mittel ca. 140 m³ Wasser. Dieses Wasser wird aufgefangen und einer Aufreinigung zugeführt.

In der Extrusionsrichtung nach der Trockenkalibrierstrecke ist in der Regel eine Nasskalibrierstrecke angeordnet. In der Nasskalibrierstrecke sind meist Blenden angeordnet, die das Extrudat während des Durchgangs durch ein Wasserbad in mindestens einem Tank abstützen. Eine durchschnittliche Extrusionsanlage weist 3 bis 4 Tanks in der Nasskalibrierstrecke auf, die jeweils mit 1 bis 5m³ Wasser pro Stunde versorgt werden müssen. Somit verbrauchen die Tanks über 100 m³ Wasser pro Schicht.

Das Wasserbad in den Tanks der Nasskalibrierstrecke wird durch eine kontinuierliche Zu- und Abführung von Frischwasser aufrechterhalten. Das Wasser aus dem Tank wird ebenfalls wieder einer Aufreinigung zugeführt. Auch die Nasskalibrierstrecke steht zur Sicherung der Formstabilität des Extrudates meist unter Vakuum.

Somit weisen bekannte Kalibriervorrichtungen eine Vielzahl von Wasseranschlüssen auf, was einen komplexen Aufbau der gesamten Anlage bedingt. Durch eine Vielzahl von Anschlüssen wird auch das Risiko von Undichtigkeiten erhöht. Außerdem ist der Wasserbedarf der Trocken- und Nasskalibrierung sehr hoch, was angesichts steigender Wasserpreise den Prozess verteuert.

Das Dokument AT 6 407 U1 beschreibt ein Verfahren und eine Vorrichtung zur Regelung der Vakuumversorgung von Kalibrierwerkzeugen. Die Vorrichtung umfasst mindestens ein Trockenkalibrierwerkzeug und mindestens ein Kalibrierbad bei dem mindestens eine Vakuumpumpe mit einem Kalibrierwerkzeug in Verbindung gebracht wird, um Luft aus dem Kalibrierwerkzeug abzusaugen, wobei der Druck im Kalibrierwerkzeug durch ein Regelventil auf einen Sollwert geregelt wird. Eine Verringerung des Energiebedarfs und eine Erhöhung der Profilqualität kann dadurch erreicht werden, dass mehrere Vakuumpumpen Luft aus einem gemeinsamen Druckbehälter absaugen und dass die Luft aus mindestens einem Trockenkalibrierwerkzeug über ein erstes Regelventil in den gemeinsamen Druckbehälter abgesaugt wird und dass weiterhin die Luft aus mindestens einem Kalibrierbad über ein zweites Regelventil in den gemeinsamen Druckbehälter abgesaugt wird.

Das Dokument JP 07 164511 A beschreibt ein Verfahren und eine Vorrichtung für eine Extrusionsanlage zur Herstellung eines Rohres aus thermoplastischem Kunststoff. Eine Kühlung des thermoplastischen Kunststoffrohres erfolgt mittels einer Nasskalibrierung.

Der vorliegenden Erfindung liegt die Aufgabe zugrunde, eine Kalibriervorrichtung zu schaffen, die Kühlmittel effizient einsetzt.

Diese Aufgabe wird erfindungsgemäß durch eine Kalibriervorrichtung mit den Merkmalen des Anspruchs 1 gelöst.

Indem sowohl die Trockenkalibierstrecke als auch die Nasskalibierstrecke von einem einzigen Kühlmittelstrom durchströmbar sind, ist es nicht mehr erforderlich, zwei Kühlmittelströme, einen für die Nasskalibrierung, einen für die Trockenkalibrierung einzusetzen. Durch die Verwendung eines einzigen Stroms wird der Aufreinigungsbedarf gesenkt.

Dabei ist es vorteilhaft, wenn die Strömungsführung des Kühlmittelstroms so ausgebildet ist, dass der Kühlmittelstrom nach der Durchströmung der Trockenkalibrierstrecke die Nasskalibrierstrecke durchströmt. Dies entspricht einer Durchströmung in Extrusionsrichtung. Alternativ kann die Strömungsführung des Kühlmittelstroms auch so ausgebildet sein, dass der Kühlmittelstrom nach der Durchströmung der Nasskalibrierstrecke die Trockenkalibrierstrecke durchströmt. Diese Strömungsführung wäre der Extrusionsrichtung entgegengesetzt. In beiden Fällen reicht die Kapazität des Wassers aus, eine effiziente Kühlung bereit zustellen.

Vorteilhafterweise befindet sich in der Trockenkalibrierstrecke mindestens ein Kalibrierblock, der von dem Kühlmittelstrom durchströmbar ist.

Um das Kühlmittel effizient durch die Anlage zu führen, ist es vorteilhaft, einen Sammelbehälter, insbesondere ein Sammelrohr, vorzusehen, in den das Kühlmittel nach dem Kühlen durch mindestens einen Kühlmittelauslass aus der Trockenkalibrierstrecke oder der Nasskalibrierstrecke einleitbar ist. Der Sammelbehälter, insbesondere das Sammelrohr, schafft eine Kühlmittelverbindung zwischen der Nasskalibrierstrecke und der Trockenkalibrierstrecke.

Für die effiziente Kühlung, insbesondere in der Nasskalibrierung ist es vorteilhaft, wenn der Kühlmittelstrom mit einer Füllstandsregelung gekoppelt ist. Damit kann z.B. in der Nasskalibrierung ein bestimmter Kühlmittelpegel gehalten werden. Dabei ist es besonders vorteilhaft, wenn die Füllstandsregelung zwischen einem Zustand des Kühlmittelpegel-Haltens und eines Kühlmittel-Abflusses umstellbar ist. Beim Anfahren der Extrusion kann damit z.B. die Nasskalibrierung ohne einen Wasserpegel gefahren werden, später dann mit einem definierten Wasserpegel.

Für eine gute Kühlmittel Versorgung ist es vorteilhaft, mindestens einen Überlauf und / oder mindestens ein Überdruckventil zum Halten eines vorbestimmbaren hydrostatischen Druckes im Kühlmittel vorzusehen.

Zur verbesserung der Formstabilität des Extrudates ist es vorteilhaft, mindestens ein Mittel zur Anlegung eines Unterdruckes in der Trockenkalibrierstrecke und / oder der Nasskalibrierstrecke vorzusehen.

Die Aufgabe wird auch durch ein Kalibrierverfahren mit den Merkmalen des Anspruchs 6 gelöst, bei dem ein Kühlmittelstrom sowohl die Trockenkalibierstrecke als auch die Nasskalibrierstrecke durchströmt.

Vorteilhafte Ausgestaltungen liegen vor, wenn der Kühlmittelstrom nach der Durchströmung der Trockenkalibrierstrecke die Nasskalibrierstrecke durchströmt oder umgekehrt.

Ferner ist es vorteilhaft, wenn mindestens ein Kalibierblock der Trockenkalibrierstrecke von dem Kühlmittelstrom durchströmt wird.

Konstruktiv ist es vorteilhaft, wenn das Kühlmittel nach dem Kühlen durch mindestens einen Kühlmittelauslass aus der Trockenkalibrierstrecke oder der Nasskalibrierstrecke in einen Sammelbehälter, insbesondere in ein Sammelrohr geführt wird.

Für die Herstellung z.B. von Fensterprofilen ist es vorteilhaft, wenn der Kühlmittelpegel in der Nasskalibrierstrecke mit einer Füllstandsregelung geregelt wird.

Durch die Verwendung mindestens eines Überlaufs und / oder mindestens eines Überdruckventils zur Einstellung eines vorbestimmbaren hydrostatischen Druckes des Kühlmittels ist es möglich, überall in der Kalibriervorrichtung eine effiziente Strömung zu haben.

Für die Formstabilität des Extrudates ist es vorteilhaft, wenn in der Trockenkalibrierstrecke und / oder der Nasskalibrierstrecke ein Unterdruck angelegt wird.

Die Erfindung wird nachfolgend unter Bezugnahme auf die Figuren der Zeichnungen an mehreren Ausführungsbeispielen näher erläutert. Es zeigen:
- Fig. 1: eine perspektivische Ansicht einer ersten Ausführungsform der erfindungsgemäßen Kalibriervorrichtung;
- Fig. 2: eine perspektivische Ansicht einer zweiten Ausführungsform der erfindungsgemäßen Kalibriervorrichtung;
- Fig. 3: eine perspektivische Ansicht einer dritten Ausführungsform der erfindungsgemäßen Kalibriervorrichtung;
- Fig. 4: eine perspektivische Darstellung einer Ausführungsform einer Füllstandsregelung für die Nasskalibrierstrecke;
- Fig. 5: eine perspektivische Darstellung der Füllstandsregelung beim Anfahren;
- Fig. 6: eine perspektivische Darstellung der Füllstandsregelung im Extrusionsbetrieb.

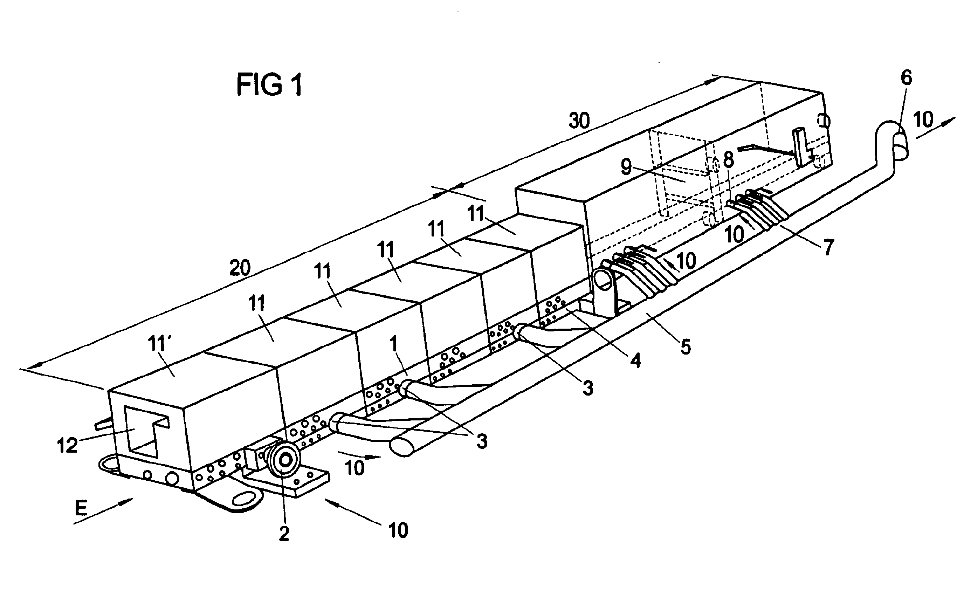

In Fig. 1 ist eine perspektivische Ansicht einer ersten Ausführungsform einer Kalibriervorrichtung dargestellt. Eine solche Kalibiervorrichtung ist Teil einer Extrusionsanlage, die hier nicht dargestellt ist. Die Kalibiervorrichtung weist eine Trockenkalibrierstrecke 20 und eine Nasskalibrierstrecke 30 auf.

Das Extrusionswerkzeug, aus dem das nicht dargestellte Extrudat austritt, wäre in Extrusionsrichtung E vor der Trockenkalibrierstrecke 20 (in Fig. 1 links) angeordnet.

Das Extrudat tritt zunächst in die Trockenkalibrierstrecke 20 ein, die in dieser Ausführungsform sechs Kalibrierblöcke 11 aufweist. Jeder dieser Kalibrierblöcke 11 wird in an sich bekannter Art von einem Kühlmittel, hier Wasser, durchströmt, um die Innenseiten 12 der Kalibrierblöcke 11, und damit das Extrudat zu kühlen.

Im dargestellten Ausführungsbeispiel tritt der Kühlmittelstrom 10 durch einen Kühlmitteleinlass 2 in den ersten Kalibrierblock 11' ein. Das Kühlmittel wird dann im Inneren durch die anderen Kalibrierblöcke 11 geführt und wird schließlich in mehreren Auffangwannen 4 unterhalb der Kalibrierblöcke 11 aufgefangen. Von den Auffangwannen 4 gehen mehrere Kühlmittelauslässe 3 ab, die das Kühlmittel in einem Sammelbehälter 5, hier einem Sammelrohr, aufsammeln.

Grundsätzlich sind auch andere Strömungsführungen für das Kühlmittel möglich, wie z.B. mehrere Kühlmitteleinlässe 2, die direkt in Kalibrierblöcke einmünden. Damit könnte der Kühlmittelstrom z.B. jedem Kalibrierblock 11 zugeführt werden.

Auch ist es möglich einen zentralen Kühlmittelauslass 3 vorzusehen, der das gesamte Wasser der Trockenkalibrierstrecke 20 sammelt. Auch sind unterschiedliche Kombinationen dieser varianten denkbar.

Das im Sammelbehälter 5 aufgefangene Kühlmittel wird nun in die Nasskalibrierstrecke 30 geführt. In der in Fig. 1 dargestellten Ausführungsform wird der Kühlmittelstrom 10 über mehrere Tankeinspeisungen 7 in die Tanks der Nasskalibrierstrecke 30 geleitet. Die Tankeinspeisungen 7 sind mit stellbaren Durchflussregelungen 8 ausgestattet.

Somit wird derselbe Kühlmittelstrom 10 sowohl in der Trockenkalibrierstrecke 20 als auch in der Nasskalibrierstrecke 30 verwendet, was zu einer erheblichen Wassereinsparung führt, da der Kühlmittelstrom 10 zweifach genutzt wird. Die Erwärmung des Kühlmittelstroms 10 in der Trockenkalibrierstrecke 20 ist in der Regel so gering (z.B. 2°C), dass der Kühlmittelstrom 10 immer noch genug Kühlwirkung in der Nasskalibrierstrecke 30 entfalten kann.

Für eine sichere Bereitstellung des Kühlmittels ist es erforderlich, dass immer ausreichend Druck vorhanden ist, damit das Wasser sowohl die Trockenkalibrierstrecke 20 als auch die Nasskalibrierstrecke 30 durchströmt.

Im Ausführungsbeispiel gemäß Fig. 1 wird der Druck in dem Sammelbehälter 5 durch einen Überlauf 6 am hinteren Ende des Sammelrohres 5 gehalten. Der Überlauf 6 hält immer einen gewissen hydrostatischen Druck im System.

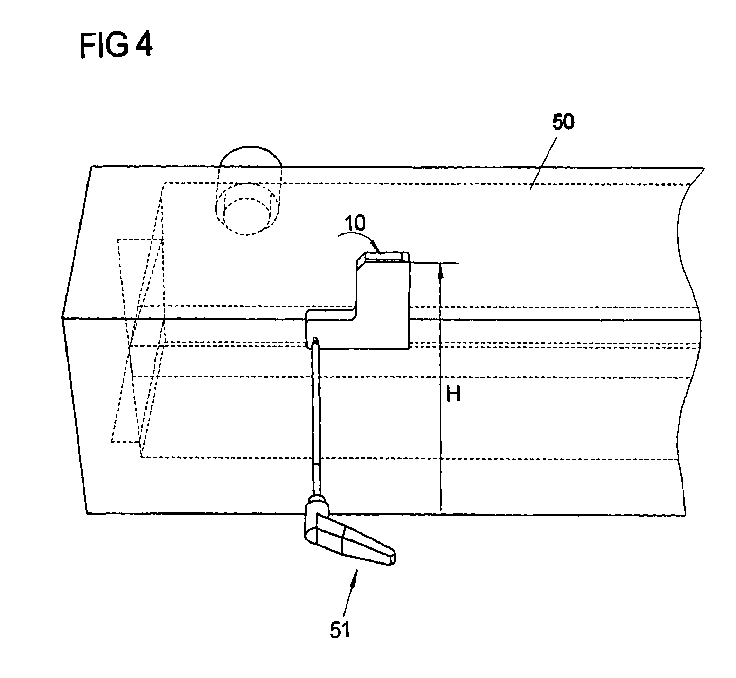

Am hinteren Ende der Nasskalibrierstrecke 30 (in Extrusionsrichtung E gesehen) ist eine Füllstandsregelung 9 für die Nasskalibrierstrecke 30 angeordnet, die im Zusammenhang mit den Fig. 4 bis 6 näher erläutert wird.

In dieser ersten Ausführungsform wird der Kühlmittelstrom 10 parallel zur Extrusionsrichtung E geführt. Grundsätzlich ist es aber auch möglich, den Kühlmittelstrom 10 entgegen der Extrusionsrichtung E zu führen, so dass das Kühlmittel zuerst die Nasskalibrierstrecke 30, dann die Trockenkalibrierstrecke 20 durchströmt. Auch hier wird ein und derselbe Kühlmittelstrom 10 in beiden Teilen der Kalibrierung genutzt.

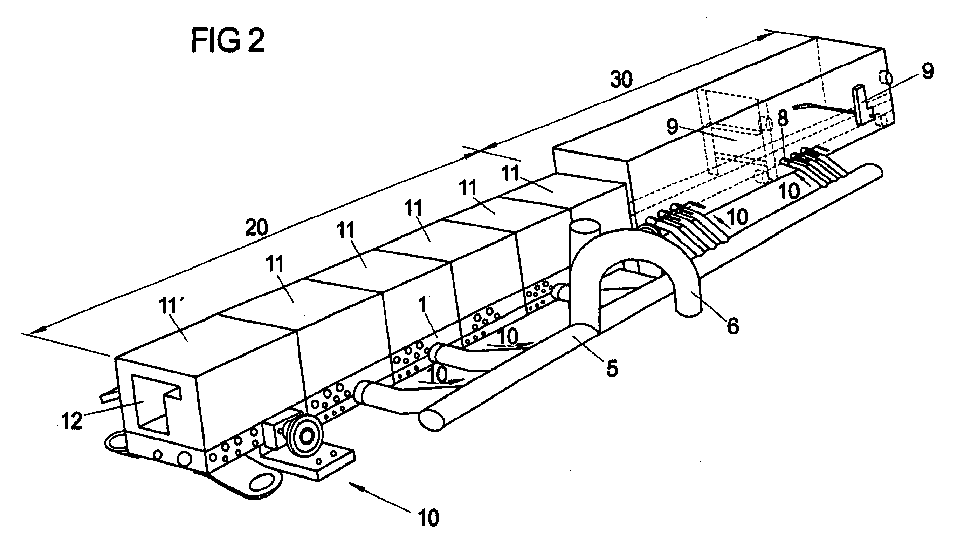

In Fig. 2 ist eine Kalibriervorrichtung mit dem grundsätzlich gleichen Aufbau wie in Fig. 1 dargestellt, so dass auf die obige Beschreibung Bezug genommen wird. Auch hier tritt das Kühlmittel Wasser in den Kühlmitteleinlass 1 ein und wird über das Sammelrohr 5 und Tankeinspeisungen 7 in die Nasskalibrierstrecke 30 geleitet.

Allerdings ist hier der Überlauf 6 zum Halten eines gewissen hydrostatischen Druckes nicht am Ende des Sammelrohres 5 angeordnet, sondern im Bereich der Trockenkalibrierstrecke 20. Grundsätzlich kann der Überlauf 6 auch an anderen Orten angeordnet sein. Auch ist es möglich, mehr als einen Überlauf 6 vorzusehen.

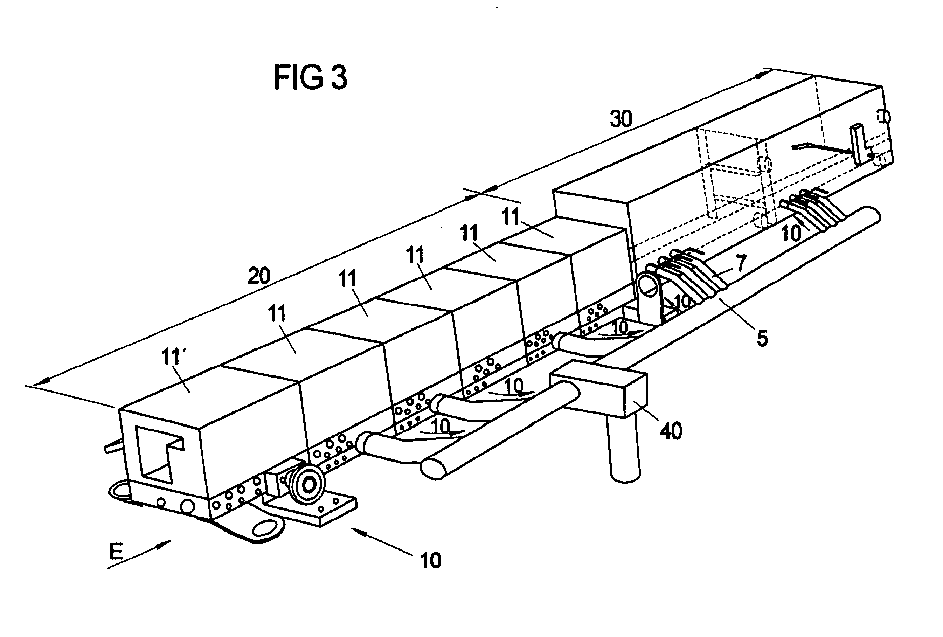

Alternativ (oder ggf. auch zusätzlich) kann ein Überdruckventil 40 entlang des Sammelrohres 5 geschaltet werden (siehe Fig. 3).

In den Fig. 4 bis 6 wird die Funktion der Füllstandsregelung beschrieben. In Fig. 4 ist ein Teil eines Tanks 51 der Nasskalibrierstrecke 30 dargestellt. In diesem Tank ist ein Füllstandsregler 9 angeordnet, der auf bestimmte Betriebszustände einstellbar ist.

Im Produktionszustand, d.h. wenn ein Extrudat in der Nasskalibrierung gekühlt wird, steht ein gewisser Kühlmittelpegel H, d.h. Wasserstand, im Tank 50. Der Füllstandsregler 9 ist dabei in der Art eines Überlaufwehres aufgebaut, so dass ab einer gewissen Höhe H der Kühlmittelstrom 10 durch eine oben am Füllstandsregler 9 angeordnete Öffnung abfließen kann.

Für das Anfahren einer Extrusion ist es aber in der Regel sinnvoll, die Tanks 50 der Nassextrusionsstrecke 30 nicht vollständig zu fluten. Daher ist der Füllstandsregler 9 mit einer Stellvorrichtung 51 ausgestattet. Im vorliegenden Fall ist die Stellvorrichtung 51 manuell verstellbar, sie kann aber auch mechanisch, elektrisch, hydraulisch und / oder pneumatisch betätigt werden.

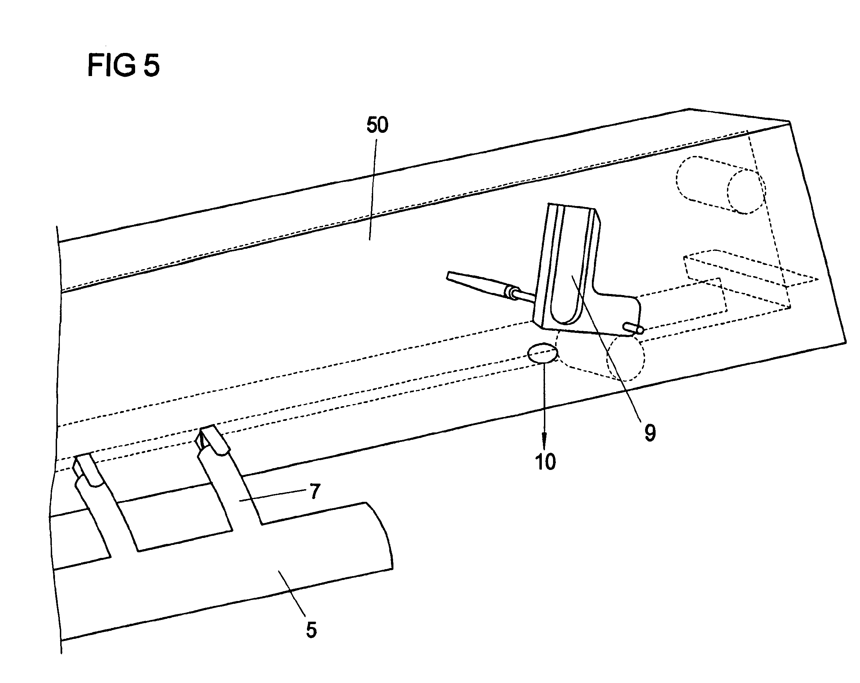

In Fig. 5 ist die Füllstandsregelung in einer verstellten Situation dargestellt, die einen Abfluss freigibt, durch den der Kühlmittelstrom 10 austreten kann. Damit wird der Pegel des Kühlmittels im Tank 50 nicht ansteigen. Diese Stellung wird während des Anfahrens der Extrusion beibehalten.

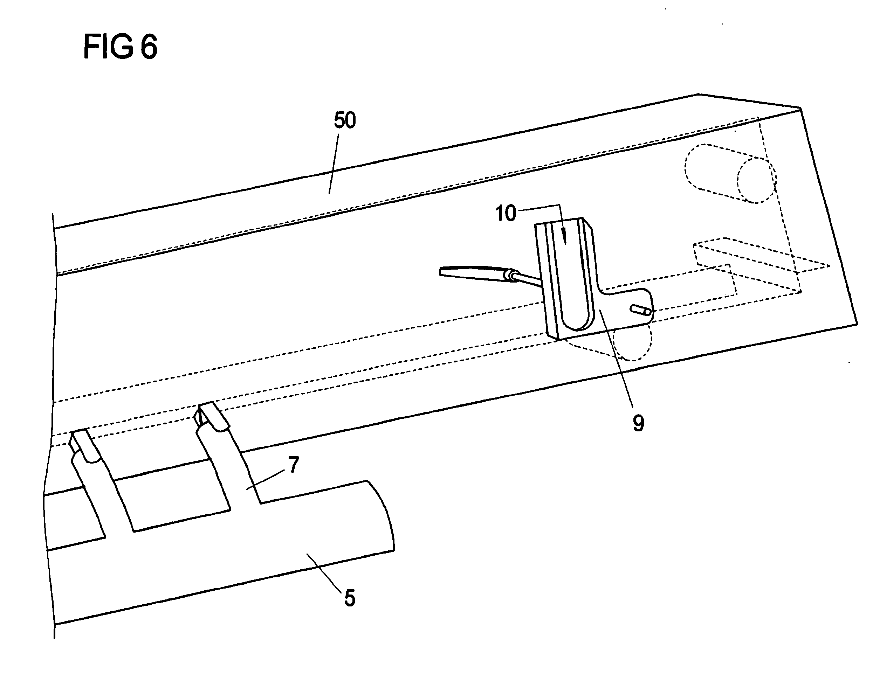

Wenn der Anfahrvorgang beendet ist, wird der Füllstandsregler 9 wieder in die erste Position geklappt, so dass das Kühlmittel nur durch die Öffnung am oberen Ende austreten kann (siehe Fig. 6).

Es seien noch folgende Anmerkungen für Anlagen der hier in Rede stehenden Art angeführt.

Damit die Nasskalibrierungsstrecke mit Wasser versorgt werden kann ist im Sammelrohr ein gewisser Überdruck sinnvoll. Dieser ist jedoch üblicherweise so gering, das sich dies kaum auf die Kühlwirkung der Trockenkalibrierungsstecke auswirkt. Die Nasskalibrierstrecke wird auch bei geringen Überdruck mit genügend Wasser versorgt, denn die Tanks sind mit Vakuum beaufschlagt und durch den Unterdruck in diesen, wird das Wasser automatisch eingesaugt, also wirken zwei Kräfte, Druck und Vakuum um das Kühlmedium in die Tanks zu befördern.

Die Nasskalibrierungsstrecke verbraucht im Prinzip weniger Wasser als die Trockenkalibrierstrecke. Es wird also nur ein Teil vom Wasser gebraucht, der Rest fließt über den Überlauf in ein Auffangbecken oder in den Abfluss.

Sollten mit wenigen Kalibrierblöcken viele Tanks betrieben werden und reicht die Wassermenge nicht aus, kann wie gehabt auch zusätzlich Wasser von der Leitung zugeführt werden.

Die Erfindung beschränkt sich in ihrer Ausführung nicht auf die vorstehend angegebenen bevorzugten Ausführungsbeispiele. Vielmehr ist eine Anzahl von Varianten denkbar, die von der erfindungsgemäßen Kalibriervorrichtung und dem erfindungsgemäßen Kalibrierverfahren auch bei grundsätzlich anders gearteten Ausführungen Gebrauch machen.

### Bezugszeichenliste

- 1: Aufspannplatten
- 2: Kühlmitteleinlass
- 3: Kühlmittelauslass
- 4: Auffangwannen
- 5: Sammelrohr
- 6: Überlauf
- 7: Tankeinspeisung
- 8: Durchflussregelung
- 9: Füllstandsregelung

- 10: Kühlmittelstrom
- 11: Kalibrierblock

- 20: Trockenkalibrierstrecke
- 30: Nasskalibrierstrecke

- 40: Überdruckventil

- 50: Tank der Nasskalibrierstrecke
- 51: Stellvorrichtung für Füllstandsregler

- E: Extrusionsrichtung

## Patentansprüche

1. Kalibriervorrichtung für eine Extrusionsanlage mit einer Trockenkalibrierstrecke (20) und einer Nasskalibrierstrecke (30),
**dadurch gekennzeichnet, dass**
sowohl die Trockenkalibierstrecke (20) als auch die Nasskalibierstrecke (30) von einem einzigen Kühlmittelstrom (10) durchströmbar ist, wobei die Strömungsführung des Kühlmittelstroms (10) so ausgebildet ist, dass der Kühlmittelstrom (10) nach der Durchströmung der Trockenkalibrierstrecke (20) die Nasskalibrierstrecke (30) durchströmt und mindestens ein Sammelbehälter vorgesehen ist, insbesondere ein Sammelrohr (5), in den das Kühlmittel nach dem Kühlen durch mindestens einen Kühlmittelauslass (3) aus der Trockenkalibrierstecke (20) einleitbar ist und einen Überlauf (6) und / oder mindestens ein Überdruckventil (40) zum Halten eines vorbestimmbaren hydrostatischen Druckes im Kühlmittel aufweist und mindestens ein Mittel zur Anlegung eines Unterdruckes in der Nasskalibrierstrecke (30).

2. Kalibriervorrichtung nach Anspruch 1, **dadurch gekennzeichnet , dass** die Trockenkalibrierstrecke (10) mindestens einen Kalibrierblock (11) aufweist, der von dem Kühlmittelstrom (10) durchströmbar ist.

3. Kalibiervorrichtung nach mindestens einem der vorhergehenden Ansprüche, **dadurch gekennzeichnet , dass** der Kühlmittelstrom (10) mit einer Füllstandsregelung (9) gekoppelt ist.

4. Kalibriervorrichtung nach Anspruch 3, **dadurch gekennzeichnet, dass** die Füllstandsregelung (9) zwischen einem Zustand des Kühlmittelpegel-Haltens und eines Kühlmittel-Abflusses umstellbar ist.

5. Kalibriervorrichtung nach mindestens einem der Ansprüche 1 bis 4, **gekennzeichnet durch** mindestens ein Mittel zur Anlegung eines Unterdrucks in der Trockenkalibrierung.

6. Kalibrierverfahren für eine Extrusion mit einer Trockenkalibrierstrecke (20) und einer Nasskalibrierstrecke (30), **dadurch gekennzeichnet, dass** ein Kühlmittelstrom (10) sowohl die Trockenkalibierstrecke (20) als auch die Nasskalibrierstrecke (30) durchströmt, wobei der Kühlmittelstrom (10) nach der Durchströmung der Trockenkalibrierstrecke (20) die Nasskalibrierstrecke (30) durchströmt und das Kühlmittel nach dem Kühlen durch mindestens einen Kühlmittelauslass (3) aus der Trockenkalibrierstecke (20) in einen Sammelbehälter, insbesondere in ein Sammelrohr (5), geführt wird und mindestens einen Überlauf und / oder mindestens ein Überdruckventil zur Einstellung eines vorbestimmbaren hydrostatischen Druckes des Kühlmittels und dass in der der Nasskalibrierstrecke (30) ein Unterdruck angelegt wird.

7. Kalibrierverfahren nach Anspruch 6, **dadurch gekennzeichnet, dass** mindestens ein Kalibrierblock (11) der Trockenkalibrierstrecke (10) von dem Kühlmittelstrom (10) durchströmt wird.

8. Kalibrierverfahren nach Anspruch 6 oder 7, **dadurch gekennzeichnet, dass** der Pegel des Kühlmittels in der Nasskalibrierstrecke (30) mit einer Füllstandsregelung (9) geregelt wird.

9. Kalibrierverfahren nach mindestens einem der Ansprüche 6 bis 8, **gekennzeichnet durch** mindestens ein Mittel zur Anlegung eines Unterdrucks in der Trockenkalibrierung.

## Claims

1. Calibrating device for an extrusion installation having a dry calibrating section (20) and a wet calibrating section (30),
**characterized in that**
both the dry calibrating section (20) and the wet calibrating section (30) can be flowed through by a single stream of coolant (10), the flow control of the stream of coolant (10) being formed such that, after flowing through the dry calibrating section (20), the stream of coolant (10) flows through the wet calibrating section (30), and at least one collecting vessel is provided, in particular a collecting tube (5), into which the coolant can be introduced after cooling through at least one coolant outlet (3) from the dry calibrating section (20) and which has an overflow (6) and/or at least one pressure relief valve (40) for maintaining a predeterminable hydrostatic pressure in the coolant and at least one means for applying a negative pressure in the wet calibrating section (30).

2. Calibrating device according to Claim 1, **characterized in that** the dry calibrating section (10) has at least one calibrating block (11), which can be flowed through by the stream of coolant (10).

3. Calibrating device according to at least one of the preceding claims, **characterized in that** the stream of coolant (10) is coupled to a filling level control (9).

4. Calibrating device according to Claim 3, **characterized in that** the filling level control (9) can be switched over between a state of maintaining the coolant level and an outflow of coolant.

5. Calibrating device according to at least one of Claims 1 to 4, **characterized by** at least one means for applying a negative pressure in the dry calibration.

6. Calibrating method for an extrusion having a dry calibrating section (20) and a wet calibrating section (30), **characterized in that** a stream of coolant (10) flows through both the dry calibrating section (20) and the wet calibrating section (30), the stream of coolant (10) flowing through the wet calibrating section (30) after flowing through the dry calibrating section (20) and, after cooling, the coolant being made to pass through at least one coolant outlet (3) from the dry calibrating section (20) into a collecting vessel, in particular into a collecting tube (5), and at least one overflow and/or at least one pressure relief valve for setting a predeterminable hydrostatic pressure of the coolant, and **in that** a negative pressure is applied in the wet calibrating section (30).

7. Calibrating method according to Claim 6, **characterized in that** at least one calibrating block (11) of the dry calibrating section (20) is flowed through by the stream of coolant (10).

8. Calibrating method according to Claim 6 or 7, **characterized in that** the level of the coolant in the wet calibrating section (30) is regulated with a filling level control (9).

9. Calibrating method according to at least one of Claims 6 to 8, **characterized by** at least one means for applying a negative pressure in the dry calibration.

## Revendications

1. Dispositif d'étalonnage pour une installation d'extrusion doté d'un tronçon d'étalonnage à sec (20) et d'un tronçon d'étalonnage humide (30), **caractérisé en ce que** tant le tronçon d'étalonnage à sec (20) que le tronçon d'étalonnage humide (30) peuvent être traversés par un flux de moyen de refroidissement (10) unique, le guidage du flux de moyen de refroidissement (10) étant réalisé de telle sorte que le flux de moyen de refroidissement (10) traverse le tronçon d'étalonnage humide (30) après avoir traversé le tronçon d'étalonnage à sec (20) et qu'au moins un réservoir de collecte est prévu, notamment un tube de collecte (5), dans lequel le moyen de refroidissement peut être amené hors du tronçon d'étalonnage à sec (20) après le refroidissement en passant à travers au moins une sortie de moyen de refroidissement (3) et comporte un trop-plein (6) et/ou au moins une soupape de surpression (40) pour maintenir une pression hydrostatique prédéfinissable dans le moyen de refroidissement et au moins un moyen d'établissement de sous-pression dans le tronçon d'étalonnage humide (30).

2. Dispositif d'étalonnage selon la revendication 1, **caractérisé en ce que** le tronçon d'étalonnage à sec (10) comporte au moins un bloc d'étalonnage (11) pouvant être traversé par le flux de moyen de refroidissement (10).

3. Dispositif d'étalonnage selon au moins l'une quelconque des revendications précédentes, **caractérisé en ce que** le flux de moyen de refroidissement (10) est couplé à un élément de réglage du niveau de remplissage (9).

4. Dispositif d'étalonnage selon la revendication 3, **caractérisé en ce que** l'élément de réglage du niveau de remplissage (9) peut être déplacé entre un état de maintien du niveau du moyen de refroidissement et un état d'écoulement du moyen de refroidissement.

5. Dispositif d'étalonnage selon au moins l'une quelconque des revendications 1 à 4, **caractérisé par** la présence d'au moins un moyen d'établissement d'une sous-pression dans l'étalonnage à sec.

6. Procédé d'étalonnage pour une extrusion doté d'un tronçon d'étalonnage à sec (20) et d'un tronçon d'étalonnage humide (30), **caractérisé en ce qu'**un flux de moyen de refroidissement (10) unique traverse tant le tronçon d'étalonnage à sec (20) que le tronçon d'étalonnage humide (30), le flux de moyen de refroidissement (10) traversant le tronçon d'étalonnage humide (30) après avoir traversé le tronçon d'étalonnage à sec (20) et le moyen de refroidissement étant guidé après le refroidissement hors du tronçon d'étalonnage à sec (20) jusque dans un réservoir de collecte, notamment un tube de collecte (5), en passant à travers au moins une sortie de moyen de refroidissement (3) et au moins un trop-plein et/ou au moins une soupape de surpression (40) pour régler une pression hydrostatique prédéfinissable du moyen de refroidissement et **en ce qu'**au moins une sous-pression est établie dans le tronçon d'étalonnage humide (30).

7. Procédé d'étalonnage selon la revendication 6, **caractérisé en ce qu'**au moins un bloc d'étalonnage (11) du tronçon d'étalonnage à sec (10) est traversé par le flux de moyen de refroidissement (10).

8. Procédé d'étalonnage selon la revendication 6 ou 7, **caractérisé en ce que** le niveau du moyen de refroidissement dans le tronçon d'étalonnage humide (30) est réglé à l'aide d'un élément de réglage du niveau de remplissage (9).

9. Procédé d'étalonnage selon au moins l'une quelconque des revendications 6 à 8, **caractérisé par** la présence d'au moins un moyen d'établissement d'une sous-pression dans l'étalonnage à sec.
